# EUROPEAN PATENT SPECIFICATION

(11) **EP 2 681 907 B1**
(45) Date of publication and mention of the grant of the patent: **06.02.2019**
(21) Application number: 12752586.3
(22) Date of filing: 27.02.2012
(51) Int. Cl.: H04N 5/761

(54) **APPARATUS AND METHODS FOR DYNAMICALLY OPTIMIZING RECORDING SCHEDULES**
VORRICHTUNG UND VERFAHREN ZUR DYNAMISCHEN OPTIMIERUNG VON AUFZEICHNUNGSZEITPLÄNEN
APPAREIL ET PROCÉDÉS D'OPTIMISATION DYNAMIQUE D'HORAIRES D'ENREGISTREMENT

(30) Priority: 01.03.2011 US 201113037620
(43) Date of publication of application: 08.01.2014
(73) Proprietor: EchoStar Technologies L.L.C., Englewood, CO 80112 (US)
(72) Inventor: CHEN, Mi, Aurora Colorado 80014 (US); TEMPLEMEN, Mark, Parker Colorado 80134 (US); BYERLEY, Seth, Parker Colorado 80138 (US); PIRO, Anthony Raymond, Highlands Ranch Colorado 80130 (US)
(74) Representative: Reeve, Nicholas Edward
(86) International application number: PCT/US2012/026780
(87) International publication number: WO 2012/118753

(56) References cited:
- EP-A2- 1 187 467
- WO-A1-2005/002214
- WO-A1-2006/129818
- US-A1- 2003 198 462
- US-A1- 2008 152 315
- US-A1- 2009 210 913
- US-A1- 2010 202 754
- US-B1- 6 177 931
- US-B2- 7 546 283

## Description

Digital Video Recorders ("DVR's") have become widely adopted as a useful tool to enhance home television viewing experience. DVR's enable users to record programming from broadcast television providers or from other video and/or audio sources. DVR's also enable users to skip forward and backward while watching a recorded program. Some devices that include DVR functionality also provide an Electronic Programming Guide ("EPG"). A device may display an EPG in order to present program schedule information and other information regarding programs that are currently being broadcast to the device or that will be broadcasted to the device in the future. In some devices, users may interact with an EPG in order to schedule DVR recordings during future time periods.

DVR's are typically limited with respect to the number of programs that may be recorded and/or presented at the same time. Resource limits may include limits on the number of channels that can be received or processed at a time (e.g., a limited number of tuners), or may include other resource limits such as limits on processing power, memory, and so forth. If a user attempts to record more programs at a given time than a DVR's limited resources can handle, a recording conflict is created that may result in one of the programs not being recorded. Thus, a user is likely to be disappointed.

Techniques for resolving conflicts in recording are known from WO2005/002214, WO2006/129818, US6177931, and EP1187467.

### SUMMARY OF THE INVENTION

The invention is defined in the independent claims to which reference should now be made. Advantageous features are set out in the dependent claims.

### BRIEF DESCRIPTION OF THE DRAWINGS

The same number represents the same element or same type of element in all drawings.
FIG. 1 illustrates an embodiment of a video content distribution environment.
FIG. 2 illustrates an embodiment of a Digital Video Recorder of FIG. 1.
FIG. 3 graphically depicts a time schedule for programs which may be received by the DVR of FIG. 2.
FIG. 4 illustrates an embodiment of a dialog box for presenting information regarding a recording resource conflict.
FIG. 5 illustrates an embodiment of a dialog box for presenting information regarding a recording resource conflict.
FIG. 6 illustrates a process for optimizing recording schedules in order to resolve recording conflicts in a DVR.
FIG. 7 illustrates a process for optimizing recording schedules in a DVR.

### DETAILED DESCRIPTION

The various embodiments described herein generally provide apparatuses, systems and methods for adjusting recording schedules of a digital video recording system. More particularly, described herein are techniques for dynamically minimizing or resolving resource conflicts between multiple uses of a television receiving resource and/or recording resources of a DVR. A DVR may receive recording requests that would concurrently use the same limited television receiving or recording resource(s), thereby creating a resource conflict if recording schedules are not adjusted or optimized. In order to resolve or, in some instances, potentially prevent resource conflicts, the DVR may dynamically alter the scheduling of one or more scheduled recordings in a way that receiving resources are utilized in an optimal manner and/or during optimal time periods.

In some embodiments, optimizing recording schedules may involve setting up an open recording request for a particular program that may be fulfilled (e.g., scheduled) when additional scheduling information regarding a scheduled future broadcast of the program is subsequently received at the DVR. In at least one embodiment, requests to record a program may be automatically rescheduled based on a determination of a different time in which the program will be broadcast and therefore available for recording.

In at least one embodiment, an audio/video stream to be received, processed, outputted and/or communicated may come in any format of audio, video or audio/video content. Exemplary audio/video formats include Motion Picture Experts Group (MPEG) standards, Flash, Windows Media and the like. It is to be appreciated that the audio/video stream may be supplied by any source, such as an over-the-air (OTA) broadcast, a satellite or cable television distribution system, an internet protocol television (IPTV) distribution system, a digital video disk (DVD) or other optical disk, the internet or other communication networks and the like. While the techniques illustrated herein are described in the context of reception of an audio/video stream, it is to be appreciated that the techniques may also be applied to the processing and output of other types of media content, such as audio streams or video streams, by any type of receiving device, including an audio receiver, a video receiver or any audio/video receiver.

In at least one embodiment, television recording schedules are adjusted in a digital video recording system. The digital video recording system identifies a first recording request to record a first program at the digital video recording system using a resource. The system identifies a second recording request, to record a second program at the digital video recording system using the resource. The system identifies a resource conflict between the first and second recording requests concurrently utilizing the resource. The system sets an open recording request that seeks additional scheduling data corresponding to another broadcast of at least one of the first and second programs, which provides a resolution to the resource conflict.

In at least one embodiment a digital video recording system may identify a first recording request to record a first program during a first time slot. The system may identify a second recording request to record a second program during a second time slot that temporally overlaps with the first time slot. The system may identify a resource conflict between the first and second recordings requests concurrently utilizing a resource. The system may then subsequently receive additional scheduling information that provides a resolution to the resource conflict, and may resolve the conflict by adjusting a recording schedule for at least one of the first and second programs.

In some embodiments, television recording schedules in a digital video recording system are optimized automatically to eliminate resource conflicts and/or to reduce the likelihood of resource conflicts. A digital video recording system may receive a request from a user to record a first program during a first time slot. The system may identify a second time slot, during which the first program is available for recording, which is less likely to create a future resource conflict than the original time. The program may be automatically rescheduled and recorded at the second time.

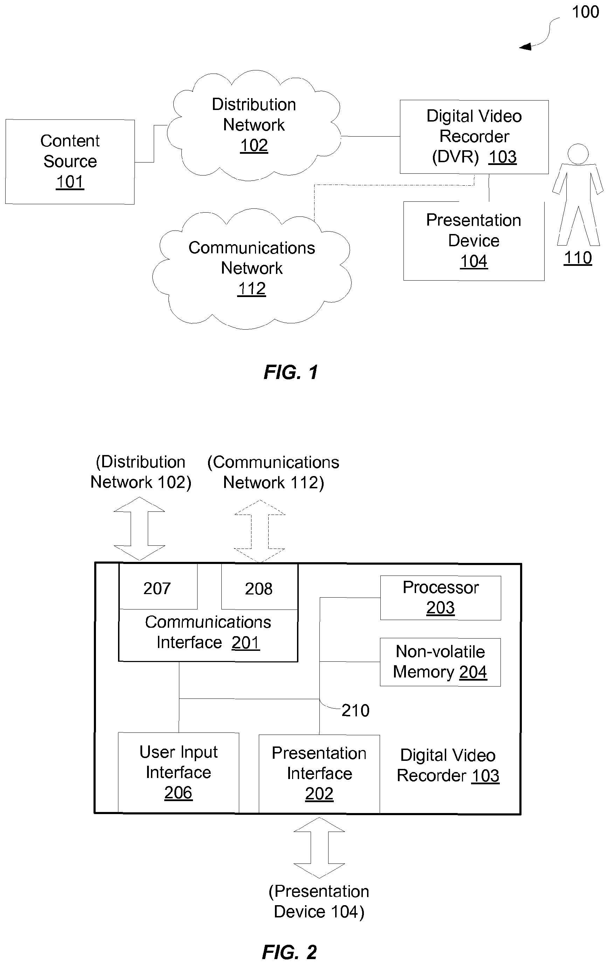

FIG. 1 illustrates an embodiment of a video content distribution environment 100. The content distribution environment 100 includes a content source 101, a distribution network 102, a digital video recorder ("DVR") 103, a communications network 112 and a presentation device 104. A DVR, as used herein may comprise a single device, or a system of multiple connected devices that together provide digital video recording functionality. Each of these components will be discussed in greater detail below. The content distribution environment 100, and each of the depicted components of the distribution environment 100, may include other components, elements or devices not illustrated for the sake of brevity.

The content source 101 is operable for receiving, generating and/or communicating content to one or more DVR's 103 via the distribution network 102. The content to be received, processed, outputted and/or communicated by the content source 101 may come in any of various forms including, but not limited to, audio, video, audio/video, data, information, or otherwise. In at least one embodiment, the content source 101 is operable for receiving various forms and types of content from other sources, aggregating the content and transmitting the content to the DVR 103 through the distribution network 102. For example, the content source 101 may be a satellite, cable, or fiber-optic television provider, which aggregates and distributes television content from various sources. In some embodiments, content source 101 may be a non-aggregating content provider, for example, an over-the-air ("OTA") television broadcast station for a television channel. It is to be appreciated that the content source 101 may receive and/or transmit practically any form and/or type of information from one or more sources including streaming television programming, recorded audio or video, electronic programming guide data and the like. In at least one embodiment, the content source 101 may be embodied as a transmission facility of the distribution network 102. Exemplary content sources 101 include OTA terrestrial transmission facilities, cable television distribution head-ends, satellite television uplink centers, broadband or internet servers and the like.

The distribution network 102 is operable to transmit content from the content source 101 to the DVR 103. The distribution network 102 may comprise any type of wired (e.g., cable and fiber) and/or wireless (e.g., cellular, satellite, microwave, and other types of radio frequency) communication medium and any desired network topology (or topologies when multiple mediums are utilized). Exemplary distribution networks 102 include terrestrial, cable, satellite, fiber-optic, and internet protocol television (IPTV) distribution systems. In at least one embodiment, the content source 101 broadcasts or multicasts content to a plurality of television receivers, e.g., DVR 103, via the distribution network 102. The content source 101 may also distribute content via the distribution network 102 that is specifically targeted to an addressable television receiver, e.g., DVR 103, such as video-on-demand content and the like.

In some embodiments, the content distribution environment 100 includes a communications network 112. (The connection between DVR 103 and communications network 112 is shown as a dotted line to indicate that not all distribution environments include such a connection, i.e., that the connection may be optional. Further, communications network 112 may also be optionally connected to content source 101.) In at least one embodiment, communications network 112 comprises a data communications network, such as the internet. In various embodiments, communications network 112 may be implemented through a public switched telephone network (PSTN), LAN, WAN, or other wired (including fiber, cable, DSL, ISDN, T1,. and the like) or wireless (including microwave, radio frequency, Wi-Fi, WiMax, cellular, and the like) network or combination thereof. Content source 101 may, in some embodiments, be connected to communications network 112 and provide additional data to DVR 103 via the communications network, such as on-demand data. DVR 103 may receive and transmit other data to and from one or more servers via communications network 112, such as programming information data, system health data, software updates, internet browsing data, and so forth. In some embodiments, communications network 112 and distribution network 102 may be the same logical and/or physical network.

The DVR 103 is operable to receive content from the distribution network 102 and output the content for presentation by the presentation device 104. For example, the DVR 103 may receive content in a live viewing mode and perform appropriate processing to format the content for presentation by the presentation device 104. In other words, the DVR 103 processes and passes the content through to the presentation device 104 for presentation. The DVR 103 is also operable to store received content for subsequent presentation to the user 110 at the presentation device 104.

In at least one embodiment, the presentation device 104 is a display device (e.g., a television) configured to display content to a user 110. In another embodiment, the presentation device 104 comprises an audio receiver (e.g., a stereo, speaker system, headphones or the like) operable to output audio content. The DVR 103 may receive an audio, video or audio/video stream in any format (e.g., analog or digital format), and store and output the associated content for presentation by the presentation device 104.

In at least one embodiment, the DVR 103 may be integrated with one or more television receivers, such as a satellite, cable, over-the-air, broadband or other type of television receiver that receives and demodulates television signals that are outputted for display on the display device 104. As used herein, a television receiver or DVR may also be referred to as a set-top box, which is a television receiver that is located externally with respect to a display device. In some embodiments, the DVR 103 and the presentation device 104 may be integrated as a device combining the functionality of a display device and a receiver/DVR or the like. The DVR 103 may be further configured to output menus and other information to presentation 104 that allow a user 110 to control the output of audio/video content by the DVR 103, view electronic programming guides (EPG's), set recording timers and the like. User 110 may interact with DVR 103 and/or presentation device 104 with one or more remote controls (not shown).

In at least one embodiment, responsive to the user 110 setting particular recording timers, the DVR 103 coordinates the reception of audio/video signals associated with a television program through a television receiving resource (e.g., a tuner) and storage of the video signal onto a storage medium (e.g., a hard drive or Flash memory). The DVR 103 may also record content currently being broadcast and viewed (e.g., the user 110 presses a record button on a remote control while watching television). The DVR 103 may include any number of television receiving resources. A DVR 103 minimally includes at least one television receiving resource to receive and record (or present) video signals associated with a television program. In some embodiments, the DVR 103 may include multiple television receiving resources to record or present multiple television programs simultaneously. For example, the DVR 103 may include two or more tuners that allow recording and/or presentation of multiple programs though the DVR 103 simultaneously. In at least one embodiment, the DVR 103 may include multiple types of television receiving resources, such as an over-the-air (OTA) tuner and a satellite and/or cable television tuner that may be utilized to receive and/or record programs from multiple sources. Responsive to a request to playback content, the DVR 103 outputs the audio/video stream to the presentation device 104 for presentation to a user 110.

In at least one embodiment, DVR 103 is configured to allocate the usage of television receiving resources and/or recording resources when one or more uses of the resources are requested. For example, a DVR with one receiving resource may allow for one incoming stream to be viewed or recorded at a time. In such an example, if a user 110 requests to view and/or record more than one video stream, a resource conflict, i.e. a recording conflict, occurs. As a second example, in a DVR with two receiving resources, a user 110 may record one video stream (e.g., a program on one channel) while viewing or recording a second, overlapping video stream (e.g., a second program on a second channel). If the user 110 in this second example desired to record a third video stream during a time slot that overlaps with time slots of both the first and second video stream, this would result in a recording conflict which would need to be resolved by the user 110, by the DVR 103 with user input, or by the DVR 103 automatically.

In at least one embodiment, recording requests are assigned priorities in order to provide a default means for dealing with recording conflicts. Priorities may be manually assigned by a user 110, or may be automatically assigned based on one or more criteria. In some embodiments, a user 110 may be prompted to make a choice between two or more recording requests when a conflict arises. In other embodiments, priority may be assigned on a first-in-time basis; in other words, recording requests that are set first are given higher priority than latter requests. Other embodiments may implement an opposite priority scheme, wherein latter requests are by default given higher priority over earlier requests. In some embodiments, one-time recording requests may be given priority over recurring or episodic timers, or vice-versa. Priority may also be assigned based on user account or identification (e.g., recording requests from parents may have higher priority than recording requests from children). In at least one embodiment, some recording requests may be given a "fixed" or "frozen" priority status, which will prevent a DVR from automatically rescheduling or bumping the recording request. Priority rules may serve as a default scheme for managing receiving resource conflicts; however the techniques described herein for altering and/or dynamically optimizing recording schedules may operate to supplant or supersede priority in order to reduce the number of recording requests that would otherwise be bumped or unaccommodated in a pure priority system.

Other resources, in addition to receiving resources, may be limiting factors on the number of programs that may be recorded and/or viewed simultaneously. For example, a DVR typically includes one or more processors, and the capacity of the DVR's processor(s) to process incoming data for multiple video streams may be a limiting factor. A DVR 103 also comprises non-volatile memory, and the memory capacity may, in some instances, also be a factor that limits the number of programs that can be simultaneously recorded and/or viewed. In sum, there are various different hardware and software components that may limit the number of programs that may be simultaneously recorded by a DVR.

In some embodiments, DVR 103 receives EPG data, which includes scheduling information regarding available programming, from content source 101 via distribution network 102. In at least one embodiment, DVR 103 receives EPG data via the communication network 112. EPG data may be browsed via a user interface presented at the presentation device 104, and a user 110 may select programming to watch and/or to record at the DVR 103. EPG data is commonly displayed to a user 110 chronologically in a graphical 2 dimensional display-with the X axis being time and with the Y axis comprising various channels of programming that are accessible via the distribution network 102. Information corresponding to the various programs that are available during a particular time frame is interposed at corresponding positions on such a graphical EPG display. Displayable programming information may include information about program title, actors, ratings data, episode numbers, a brief description of the program, and so forth. Some EPG implementations permit a user 110 to zoom or focus on a particular program or time slot to view extended data.

In at least one embodiment, a user 110 may browse EPG data for future programs and select the events to schedule for recording. Recording timers may be set to record a single instance of a program, or may be set as recurring timers to recurrently record related programs, such as episodes of a series. As an example, a user 110 may select a first program at the DVR 103, constituting a first recording request. The user 110 may then, at any subsequent time prior to the termination of the broadcast time slot of a second program, select the second program to record at the DVR 103-constituting a second recording request. If time slots for the first and second programs overlap, the DVR 103 may determine that there is a conflict due to there being insufficient resources to fulfill both the first and second recording requests and take actions to dynamically optimize the schedule using mechanisms disclosed herein

It is not uncommon in television broadcasting for the same program to air multiple times. For example, the same episode of a television series may be rebroadcasted one or more times (in addition to a first broadcast) over a number of days, weeks or months. In some instances, a featured movie may be broadcasted at various times over a period of days, weeks, or months. At times, identical programs may be found on different channels. In some embodiments, programs may be found that are substantially, but not exactly, identical. Substantially identical programs may present the same program but may be edited slightly differently, different commercials or supplemental material may be inserted, and so forth, but the substance and content of the program is primarily the same.

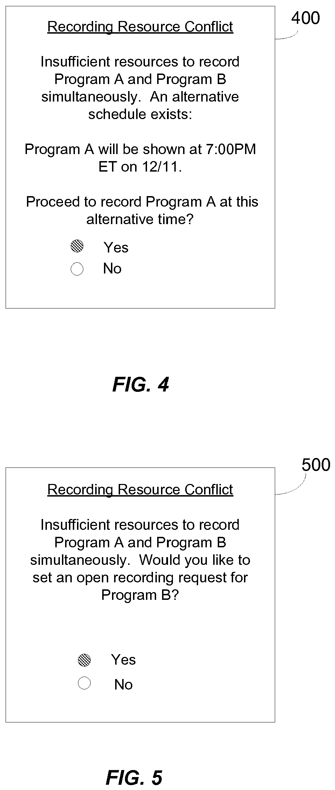

In at least one embodiment, when a DVR 103 determines that there is a resource conflict between two or more recording requests, the DVR 103 may process current EPG data in order to seek one or more alternative schedules for one or more of the first and second programs, which would resolve the conflict. If an alternative time slot is found for one of the programs in the EPG data, which eliminates the conflict, then a user 110 may be prompted via the presentation device to reschedule one of the events at the alternative time. An example of such a dialog box is depicted as dialog box 400 of FIG. 4. In some embodiments, one or more events may be rescheduled automatically when an alternative time slot for the one or more events is found which would eliminate a conflict.

If there is no alternative time slot that would alleviate a recording conflict for any of the events involved in the recording conflict-in other words, if after processing current EPG data the DVR 103 determines that an alternative schedule is unavailable-the DVR 103 may limit the recording schedule such that fewer than the total number of requested recordings are scheduled during the original conflicting time slots. In at least one embodiment, the DVR 103 may set an open recording request corresponding to one or more other programs. An open recording request is a recording request that requires additional data, i.e., data that is not immediately available, in order to be scheduled and/or fulfilled. An open recording request may seek additional scheduling information corresponding to another broadcast of a program in a different time slot. In at least one embodiment, such additional scheduling information may become available at the EPG at a later time, and at that time, the open recording request may be scheduled and then fulfilled at the corresponding time when the program is broadcasted. In at least one embodiment, open recording requests may expire prior to being fulfilled and then be abandoned and/or deleted. The expiration time period may be a fixed time period that is preset at the system or may be configurable by a user 110.

In at least one embodiment, setting an open recording request may comprise obtaining or querying extended programming scheduling information (e.g., EPG data) from an external source. In some embodiments, an external source may be a website or server that is accessible via the communications network 112. In at least one embodiment, the external source may be the content source 101 and the content source 101 may be queried via the distribution network 102 or, optionally, communications network 112. Newly received or extended EPG data received based on the query of extended scheduling information may be processed to determine whether there is any data relating to one or more of the programs that were implicated in a resource conflict, for example, whether a future alternative time slot will be available for a program, e.g., a program for which there is an outstanding open recording request. If an alternative schedule for one or more of the events is found, the one or more programs may be rescheduled to the future alternative time slot to obviate the conflict.

In at least one embodiment, an open recording request may be a rolling query for new scheduling information regarding a program that is implicated in a resource conflict, the query executed periodically as the DVR 103 receives new EPG data. In some embodiments, an open recording request may comprise a rolling query for scheduling information regarding two or more of the programs that are involved in the conflict, including, in some embodiments, a rolling query for scheduling information regarding all of the programs that are involved in the conflict.

In an example embodiment of a DVR system that only has recording resources to record one program at a time, a user 110 may request to record two programs with overlapping time slots. The system may search presently available EPG data to determine whether there is an alternative schedule for either of the events. If no alternative schedules are found, the system may analyze priority information to identify a higher priority request of the first and second recording requests. The higher priority request may be scheduled to be recorded during its originally scheduled time slot, and an open recording request may be set for the other event or, in some embodiments, an open recording request may be set for both of the events. An open recording request may seek additional scheduling information corresponding to other broadcasts of the event(s) during one or more different time slots. In an embodiment where an open recording request is set for both events, if additional schedule information regarding either of the events is received at the DVR 103 prior to the arrival of the scheduled recording time slot corresponding to the higher priority event, the entire schedule may be rearranged based on the received additional schedule information in order to accommodate recording of both events. Depending on whether the additional data pertains to the higher or lower priority event, this may involve scheduling the lower priority event at a new time based on the new information; or, it may involve rescheduling the higher priority event to a new time and scheduling the lower priority event during an originally requested time, Continuing this example, if no additional data is received regarding either of the events prior to the scheduled recording time of the higher priority event, it will be recorded in its scheduled time slot. In some embodiments, an open recording request may remain pending for the lower priority event after the higher priority event has been recorded.

The example discussed in the preceding paragraph and the techniques discussed herein may be extended to a scenario with any number of recording requests and/or recording resources. As another example, a user 110 may attempt to schedule the recording of three (or four or five) programs at overlapping times where recording resources are only available to record two. Two programs would be tentatively scheduled based on a priority scheme, and an open recording request would be set for the other event(s). In at least one embodiment, open recording requests would be set for all of the events-including those that are scheduled. If additional information is received regarding any of the events, the schedule may be rearranged to optimize the number of requested programs for which recorded can be accommodated. In some embodiments, open recording requests for scheduled recording events-e.g., those that have higher priority-will close once the events are recorded at their originally scheduled time(s), but open recording requests for unscheduled recording events-such as those that may be bumped due to lower priority-may remain open for a fixed period of time after the originally scheduled recording time, or, in at least one embodiment, indefinitely.

FIG. 2 depicts an embodiment of a digital video recorder ("DVR") 103. DVR 103 will be discussed in context of the content distribution environment 100 discussed above. DVR 103 includes a communications interface 201, presentation interface 202, processor 203, non-volatile memory 204, and user input interface 206. FIG. 2 is merely an illustration of an embodiment of a DVR 103, and it is understood that the components thereof may be implemented either functionally or logically, as hardware or as software, and may be integrated into consolidated units or separated into multiple units beyond what is depicted in the example embodiment shown in FIG. 2. Further, DVR 103 may include additional components beyond those depicted in FIG. 2. The various components of digital video recorder 103 are depicted as being connected via a bus 210. The bus 210 and the connections thereto that are depicted in FIG. 2 are merely illustrative; the components of the DVR 103 may be connected in any of several configurations using any number of buses or other connections.

DVR 103 includes a communications interface 201. Communications interface 201 includes a television receiving interface 207 and a network interface 208. Television receiving interface 207 communicates with distribution network 102 to receive content, including programming content, and other data from a content source. As depicted by the dashed double arrow, communications interface 201 is optionally connected to a communications network 112 (e.g., the internet), which may be separate from distribution network 102, via network interface 208.

DVR 103 further includes a presentation interface 202 which outputs streams of video and/or audio data for presentation on presentation device 104. DVR 103 also includes a user input interface 206 which is configured to receive commands from a user 110. In at least one embodiment, user input interface 206 receives commands from a user 110 through a remote control (not shown). The user input interface 206 may comprise an IR receiving interface or radio frequency (RF) receiving interface that is configured to communicate with a correspondingly configured remote control. In at least on embodiment user input interface 206 may be configured to provide 2-way communication with a remote control.

In at least one embodiment, the user input interface 206 receives recording requests from a user to record one or more programs. A first recording request to record a first program at the DVR 103 may be received and/or identified. A second recording request to record a second program at the DVR may also be received and/or identified. Recording requests may be received as a result of a user interaction-with a remote control that sends signals to user input interface 206-with an EPG graphical interface being displayed via the presentation interface 202.

DVR includes a processor 203. The processor is configured to process data received via the communications interface 201. In some embodiments, processor may be configured to demodulate, decrypt, and/or decode video data received from distribution network 102 in order to provide a video stream in a displayable format to the presentation interface 202 for display on presentation device 104. Processor 203 may also be configured to process one or more incoming video streams and coordinate storage of the video streams into the in non-volatile memory 204 for later viewing.

The television receiving interface 207 of DVR 103 further includes one or more receiving resources, which may be tuners, as discussed elsewhere herein. A receiving resource may comprise hardware and/or software, or a combination thereof. A receiving resource provides the capability to extract and process a stream of video data (e.g., an incoming channel of television programming) from a larger stream of data that is received at communications interface 201. A DVR 103 with multiple receiving resources provides the functionality and capability of receiving and processing multiple streams of video data

In at least one embodiment, processor 203 may be further configured to determine whether there is a resource conflict corresponding to two or more recording requests that are identified by the processor 203 and/or received via the user input interface 206. Upon detection of a resource conflict, the processor may query available EPG data to determine whether an alternative schedule for one or more of the recording requests is available. If an alternative schedule is found, the recording requests may be rescheduled automatically, or in some embodiments, a user may be prompted to confirm whether the user wants to deploy the alternative schedule. If an alternative schedule is not found, processor 203 may set an open recording request for at least one of the two or more corresponding recording requests. In at least one embodiment, an open recording request may be configured such that the processor 203 queries multiple disparate channels of programming to search for similar or identical programs to one or both of the first and second programs. When additional scheduling information regarding at least one of the first and second recording requests-which provides a resolution to the resource conflict-is received by the communications interface 201, the processor may resolve the conflict by adjusting a recording schedule for at least one of the first and second programs.

In at least one embodiment, processor 203 may dynamically optimize recording schedules regardless of whether or not a recording conflict arises. A request may be received from a user, via user input interface 206, to record a program during a time slot. Processor 203 may scan available EPG data and determine whether an alternative schedule exists for the program, other than the requested time slot. If an alternative time slot exists, the processor may analyze the time slots using an optimization algorithm in order to determine which of the two time slots to use to schedule the recording event. The algorithm may determine which recording time is less likely to create a future resource conflict (e.g., a future recording conflict or a conflict with a user wanting to use the receiving resource to view live television). If one alternative time slot is determined to be more optimal, in that it is less likely to become involved in a future-arising resource conflict, the recording request may be rescheduled to be fulfilled during the alternative time slot. In one embodiment, the processor 203 may reschedule recordings of programs to earlier time slots when they are available. This action may be taken without upsetting a user, given that the program will already be available by the time that the user originally scheduled the recording and expects it to be available. Further, if an event is scheduled to be recorded at an earlier time than original scheduled, and a conflict arises at that earlier time due to the receipt of a second recording request for an overlapping time slot, the event can be rescheduled to the original later time using techniques described herein.

In some embodiments, the processor 203 may further analyze EPG data and other data to determine an optimal time slot for a recording. The processor 203 may analyze user viewing data to determine times of day, days of the week, or other times when a user is statistically less likely to be utilizing television receiving resources, and may reschedule a recording event to this more optimal time. For example, a user may set a recording request to record a movie at a particular time. The system may recognize that the recording request is during a time frame when a user is likely to be watching television, for example during a football game of a team the user typically watches. The DVR in this example may search EPG data to determine that the movie will also be broadcast at 2 pm, a time when the user rarely uses his television (e.g., due to being at work). In some embodiments, DVR systems may already automatically track user viewing data to provide health information to a service provider, or as part of a recommendations scheme, or for other purposes. Thus, this user viewing data may be further processed and utilized for schedule optimization.

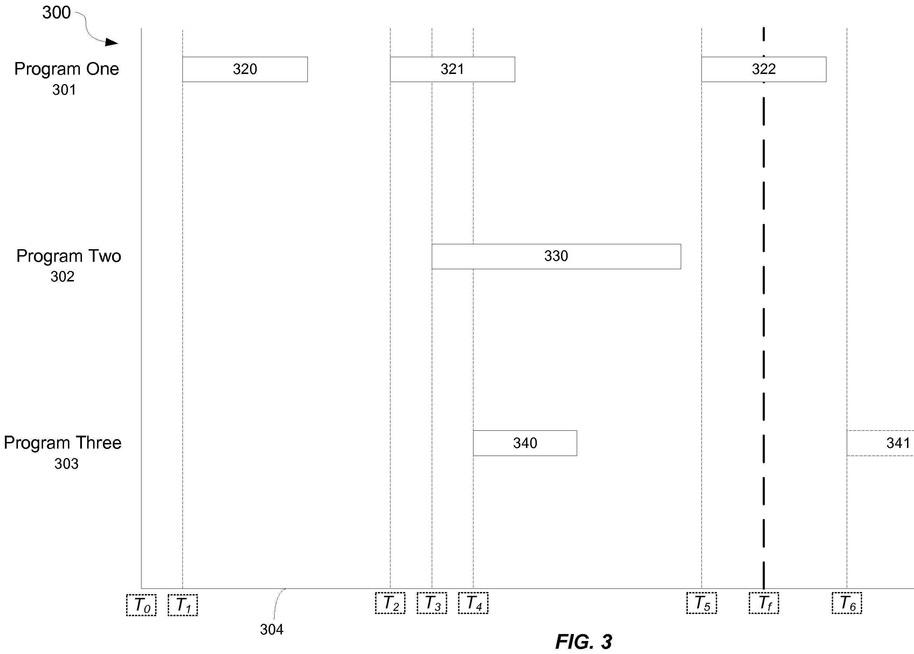

FIG. 3 provides a graphical view 300 of hypothetical programming schedules for various programs. In FIG. 3, three different exemplary programs are depicted: Program One 301, Program Two 302, and Program Three 303. The x-axis 304 of the graph represents time, with T0 representing a current time from the perspective of a user operating a DVR system. EPG data, including scheduling information regarding programs, may be available at the DVR system for a period of time extending from the present time T0 until a particular future cutoff time Tf, which represents the outer limit of EPG data that is presently available to a user at the DVR. Program One 301 is available at a first time slot 320 that begins at T1, a second time slot 321 that begins at T2, and a third time slot 322 that begins at T5. Program Two 302 is available during only one known time slot 330, which begins at T3. Program Three 303 is available during time slot 340, which begins at T4. Time slots 320, 321, 322, 330 and 340 are known or readily discoverable by a processor of the DVR due to the timeslots beginning before Tf, or in other words, in the time span of available EPG scheduling data. Program Three 303 is also available at a future timeslot 341 which has a particular beginning time T6, but which is not immediately known to the digital video recording system at the present time T0, since the timeslot begins at T6, which is after the furthest extent of available EPG data (Tf).

In various embodiments, a DVR system may have recording resources to record two or more separate programs at the same time. In an example embodiment of a system that can record two separate programs at a time, a conflict would arise if a user chose to record Program One 301 at time slot 321, Program Two 302 at time slot 330, and Program Three during time slot 340. Specifically, a recording conflict exists because time slot 321, time slot 330, and time slot 340 all overlap, for example at time T4. Because there is a conflict, a DVR in this embodiment may attempt to alter recording schedules in order to obviate the conflict. The DVR may first analyze existing EPG data to determine if an alternative schedule exists for any of the programs involved in the recording conflict, which would resolve the conflict. In this example, the system would find time slots 320 and 322 in its search of EPG data, which are alternative time slots for Program One 301. In at least one embodiment, the DVR system may automatically adjust the recording schedules such that program one will be recorded during time slot 320, thereby alleviating the conflict and permitting both Program Two 302 and Program Three 303 to be recorded during time slots 330 and 340, respectively, with the two available recording resources. In at least one embodiment, an alternative schedule which uses earliest available recording times may be preferred and used (e.g., using time slot 320 in stead of 322.) In another embodiment, the system may prompt the user with a dialog box, for example a dialog box containing elements similar to the dialog box 400 depicted in FIG. 4, which indicates that an alternative schedule has been found and prompts whether the user wants to record the program(s) utilizing the alternative schedule. In at least one embodiment, a dialog box may additionally present multiple alternative schedules and the user may selected an alternative schedule for the system to use.

In a second example embodiment, a DVR system may have recording resources to record or present one program at a time. In such a system, a conflict would arise if a user chose to record Program One 301 at time slot 321, Program Two 302 at time slot 330, and Program Three during time slot 340, given that the three time slots all overlap for at least one portion of time (e.g., at T4). Because there is a conflict, the DVR system in this embodiment may attempt to alter recording schedules in order to preventatively eliminate the conflict. The DVR may first analyze existing EPG data to determine if an alternative schedule exists for any of the programs involved in the recording conflict. In this example, the system would find time slot 320 and time slot 322 in its search of EPG data, which are alternative time slots for Program One 301 that are either prior to or after the currently scheduled timeslot of 321 and which would not currently implicate any further recording conflicts. In at least one embodiment, the DVR system may automatically adjust the recording schedules such that Program One 301 will be recorded during earlier time slot 320, or alternatively at later time slot 322, thereby alleviating one portion of the conflict. In at least one embodiment, the DVR system analyzes system usage data to determine when a user is least likely to be using television receiving resources, and selects a time slot of the alternative time slots 320 and 322 to record the program, based on analysis of the system usage data, in order to minimize a likelihood of a subsequent recording conflict. In another embodiment, the system may prompt the user with a dialog box such as the dialog box 400 depicted in FIG. 4, before rescheduling Program 1 301.

Continuing with discussion of the example embodiment from the previous paragraph, even if Program One 301 is rescheduled to time slot 320, there would still be insufficient resources to record both Program Two 302 and Program Three 303 during their scheduled time slots, given that the time slots 330 and 340 overlap. The DVR will attempt to alter recording schedules to alleviate this conflict. However, examination of available EPG data (from T0 to Tf) indicates that an alternative schedule for either Program Two 330 or Program Three 340 is not available. As such, the DVR may select one program to be scheduled for recording at the specific time slot that was requested, for example Program Two at time slot 330. A selection of a program to record may be made according to various prioritization schemes, such as those discussed elsewhere herein or known by persons skilled in the art. Additionally, the DVR may set an open recording request for the lower priority program-in this example, Program Three 303-such that Program Three 303 will not be scheduled to record at time slot 340, given the resource conflict. Rather, an open recording request for Program Three 303 will provide that the program be recorded at an indefinite future time slot, contingent upon the DVR subsequently receiving additional scheduling information regarding such a future time slot (e.g., time slot 341). A user may be notified that an open recording request will be set via a dialog box such as the dialog box 500 depicted in FIG. 5. Dialog box 500 may give the user the option of whether or not to set the open recording request for the program.

In various embodiments, additional scheduling information that presents a resolution to an open recording request may be subsequently received at the system. In one embodiment, the system may periodically inspect new EPG programming schedule data that it is subsequently received by the system. Thus, although Tf may represent the extent of available EPG data at time T0, at some time later than T0, EPG information regarding subsequent programming schedules, for example a program schedule at time T6, may be received and processed. Continuing the example of the previous paragraph, when subsequent additional scheduling information is received regarding time slot 341 for Program Three 303, the system may fulfill the open recording request for Program Three 303 by setting a recording timer for Program Three 303 at time slot 341 according to the newly received scheduling information. Thus, the system accomplishes the recording of all three programs that were originally scheduled at conflicting times. The additional scheduling data which fulfills the open recording request for Program Three 303 may, in some instances, be received before the recording request for Program Two 302 is executed at time T3 (its original time). In other instances, Program Two 302 may be recorded at time T3, and the open recording request for Program Three will remain an open recording request until data is received regarding time slot 341 at which time the open recording request will be converted into a definite recording request at that time slot.

In at least one embodiment, additional data may be received via mechanisms other than a DVR system scanning new EPG data as it is received at the system. The system may connect with an external server or website that provides program scheduling information beyond that which is currently present in the system. This may be done via a network interface of the DVR. The DVR system may examine this extended programming information and discover that Program Three 303 will be available at time slot 341, even though this information has not been received at the system via standard mechanisms for receiving EPG data (e.g., through the distribution network). The extended data may be obtained in fulfillment of an open recording request, or in some implementations may be queried before an open recording request is set.

In at least one embodiment, even when a recording request remains scheduled for recording based on having higher priority than another recording request that gets bumped, an open recording request may still be set for the higher priority program. Thus, if new scheduling information is received prior to the higher priority program's recording time, that recording can be dynamically rescheduled to the new time. Then, the lower priority recording request, which was bumped, can then be scheduled for recording during the time slot from which it was originally bumped due to its lower priority.

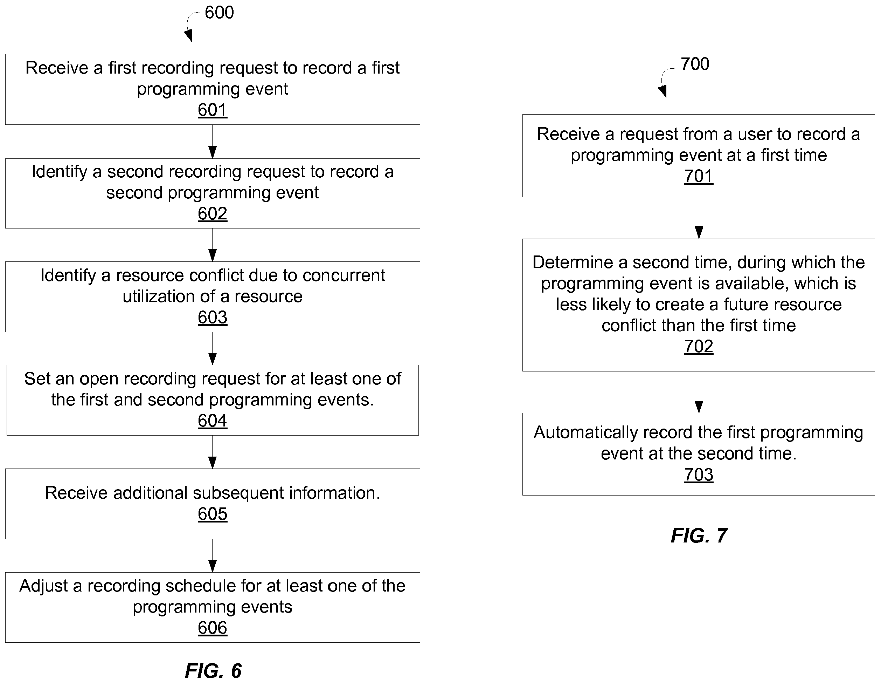

FIG. 6 depicts a flowchart of an embodiment of a method 600 for altering recording schedules in a DVR system to eliminate or reduce recording conflicts. First, a recording request is received to record a first program (operation 601). A second recording request to record a second program is identified (operation 602). A DVR determines that there is a resource conflict (i.e. a recording conflict) due to the two recording requests concurrently utilizing a resource (operation 603). Optionally, in at least one embodiment, an open recording request is set, which seeks additional scheduling data corresponding to another broadcast of at least one of the first and second programs that provides a resolution to the resource conflict (operation 604). In some embodiments, the open recording request may be a rolling query for new scheduling information regarding the second program, which is executed as new EPG data is received at the device or system. In at least one embodiment, the rolling query may be for data regarding both the first and second programs. The system subsequently receives additional subsequent information, including, for example, scheduling information, regarding at least one of the first and second programs that provides a resolution to the resource conflict (operation 604). Upon receiving the additional scheduling information, the recording schedule for at least one of the programs is adjusted (operation 603).

In some situations, additional scheduling information may be received comprising multiple alternative time slots in which one or more programs involved in a resource conflict will be broadcasted. A system may analyze system usage data to determine an alternative schedule, corresponding to one or more of the multiple alternative time slots, when a user is less likely to be using the resource. The system may select the alternative schedule based on the analysis of system usage data. In at least one embodiment, the system may select an earliest time slot, of multiple alternative time slots, in which to record a program.

There are other techniques that may be used at a DVR system to minimize recording conflicts and/or to optimize recording schedules. FIG. 7 depicts a flowchart of an embodiment of a method 700 for automatically optimizing recording schedule to prevent or reduce recording conflicts. In at least one embodiment, the DVR device or system may automatically rearrange recording schedules based on one or more optimization algorithms or techniques. A DVR system receives a recording request from a user to record a program at a first time (Operation 701). The device or system may determine a second time, during which the program is available, which is less likely to create a future resource conflict than the first time (Operation 702.) A processor of the DVR may automatically schedule the first program to be recorded at this second time, such that the program is recorded at the second time (Operation 703).

In at least one embodiment, television recording schedules may be dynamically optimized by recording a program at a time that is earlier than a requested recording time. Thus, recorded events will already be available at the later time, when the user expects them to be recorded, and resources will be freed up during that time. Additionally, if a recording conflict arises at the earlier time, the dynamically rescheduled recording request can be reset to the original, later recording time or to another time.

In at least one embodiment, television recording schedules may be dynamically optimized by analyzing user viewing data. A second time slot during which a program is available may be determined to be a time when it is statistically less likely that a user will be using the receiving resources. For example, a user may regularly watch television in the evenings, and thus a recording of a program scheduled in the evening may automatically be rescheduled to an earlier mid-day broadcast of the same program. In some embodiments, a system may assume that certain times are more optimal to record programs than others (e.g. from 2 a.m. to 6 a.m.).

In at least one embodiment, a system automatically schedules a first program to be recorded at a second, optimized time slot that is determined to be less likely to be implicated in a resource conflict than the originally scheduled time. A second recording request from a user may then be received. The second request may be a request to record a second program during a time slot that temporally overlaps with the optimized time slot for the first program, thus creating a resource conflict. The system may determine a new time in which one of the first and second programs is available and automatically reschedule the corresponding program to be recorded at the new time.

## Claims

1. A method for adjusting recording schedules in a digital video recording system (103), comprising:
a) identifying a first recording request to record a first program (301) during a first time slot (321) at the digital video recording system using a resource;
b) identifying a second recording request to record a second program (302) during a second time slot (330) at the digital video recording system using the resource;
c) identifying a resource conflict between the first and second recording requests concurrently utilizing the resource;
d) processing current electronic programming guide (EPG) data in order to seek an alternative recording schedule for at least one of the first and second programs that would resolve the resource conflict;
the method **characterised in that** it further comprises:
e) where resolving the conflict is not possible based on the current electronic programming guide (EPG) data,
scheduling the first recording request to record the first program during the first time slot; and
setting an open recording request that expires upon passage of a fixed time period, the open recording request seeking additional scheduling data, from new EPG data, corresponding to another broadcast of the second program, which provides a resolution to the resource conflict;
f) subsequently receiving additional scheduling data which satisfies the open recording request, the additional scheduling data corresponding to an alternative broadcast time of the second program (302); and
g) dynamically adjusting a time slot in which to record the second program based on the received additional scheduling data.

2. The method of claim 1, wherein the fixed time period is preset by the digital video recording system (103), or is user configurable.

3. The method of claim 1, wherein step d) comprises analyzing usage data of the digital video recording system (103) to determine an adjusted recording schedule, corresponding to one or more multiple alternative time slots, when a user is less likely to be using the resource.

4. The method of claim 1, wherein the first recording request initially corresponds to a first time slot (321) and the second recording request initially corresponds to a second time slot (330) that temporally overlaps at least in part with the first time slot.

5. The method of claim 4, wherein the open recording request comprises a rolling query for new scheduling information regarding the second program (302), the rolling query executed periodically as the system receives new EPG data.

6. The method of claim 5, wherein the rolling query expires after a finite period of time.

7. The method of claim 1, further comprising:
analyzing priority data to determine a higher priority for the first recording request prior to scheduling the first recording request during the first time slot (321); and
setting the open recording request corresponding to the second program (302).

8. A digital video recorder (103), comprising:
a communications interface (201) that receives video programming content from a content source (101);
a user input interface (206) that receives a first recording request to record a first program (301) during a first time slot (321), and a second recording request to record a second program (302) during a second time slot (330); and
a processor (203) configured to:
a) identify a resource conflict between the first and second recording requests concurrently utilizing the resource;
b) process current electronic programming guide (EPG) data in order to seek an alternative recording schedule for at least one of the first and second programs that would resolve the resource conflict, and
the digital video recorder **characterised in that** the processor is further configured to: where resolving the conflict is not possible,
c) schedule the first recording request to record the first program during the first time slot, and set an open recording request that expires upon passage of a fixed time period, that seeks additional scheduling data, from new EPG data, corresponding to another broadcast of the second program, which provides a resolution to the resource conflict;
d) subsequently receiving additional scheduling data which satisfies the open recording request, the additional scheduling data corresponding to an alternative broadcast time of the second program (302); and
e) dynamically adjusting a time slot in which to record the second program based on the received additional scheduling data.

9. The digital video recorder (103) of claim 8, wherein in step b) the processor (203) is operable to:
analyze usage data of the digital video recorder to determine an adjusted recording schedule, corresponding to one or more of the multiple alternative time slots, when a user is less likely to be using the resource; and
select the adjusted schedule to record the first (301) and second (302) programs based at least in part on the analysis of the usage data.

10. The digital video recorder (103) of claim 8, wherein the fixed time period is preset by the digital video recording system, or is user configurable.

11. The digital video recorder (103) of any one of claims 8 to 10, wherein the processor (203) configures the open recording request to query multiple disparate channels of programming to search for broadcasts of the second (302) program.

12. The digital video recorder (103) of any one of claims 8 to 10, wherein the open recording request comprises a rolling query for new scheduling information regarding the second recording request, which is executed periodically when new electronic programming guide data is received at the device.

## Patentansprüche

1. Verfahren zum Anpassen von Aufzeichnungsplänen in einem digitalen Videoaufzeichnungssystem (103), umfassend:
a) Identifizieren einer ersten Aufzeichnungsanfrage zum Aufzeichnen eines ersten Programms (301) während eines ersten Zeitfensters (321) in dem digitalen Videoaufzeichnungssystem unter Verwendung einer Ressource;
b) Identifizieren einer zweiten Aufzeichnungsanfrage zum Aufzeichnen eines zweiten Programms (302) während eines zweiten Zeitfensters (330) in dem digitalen Videoaufzeichnungssystem unter Verwendung der Ressource;
c) Identifizieren eines Ressourcenkonflikts zwischen der ersten und zweiten Aufzeichnungsanfrage unter gleichzeitiger Nutzung der Ressource;
d) Verarbeiten aktueller Daten des Elektronischen Programmführers (EPG), um einen alternativen Aufzeichnungsplan für mindestens eines der ersten und zweiten Programme zu suchen, die den Ressourcenkonflikt lösen würden;
wobei das Verfahren **dadurch gekennzeichnet ist, dass** es ferner Folgendes umfasst:
e) wenn ein Lösen des Konflikts basierend auf den aktuellen Daten des elektronischen Programmführers (EPG) nicht möglich ist,
Planen der ersten Aufnahmeanfrage zum Aufzeichnen des ersten Programms während des ersten Zeitfensters; und
Einstellen einer offenen Aufzeichnungsanfrage, die nach Ablauf eines bestimmten Zeitraums abläuft, wobei die offene Aufzeichnungsanfrage zusätzliche Planungsdaten aus neuen EPG-Daten sucht, die einer anderen Übertragung des zweiten Programms entsprechen, die eine Lösung des Ressourcenkonflikts bietet;
f) nachfolgendes Empfangen zusätzlicher Planungsdaten, die der offenen Aufzeichnungsanfrage entsprechen, wobei die zusätzlichen Planungsdaten einer alternativen Sendezeit des zweiten Programms (302) entsprechen; und
g) dynamisches Anpassen eines Zeitfensters, in dem das zweite Programm basierend auf den empfangenen zusätzlichen Planungsdaten aufgezeichnet wird.

2. Verfahren nach Anspruch 1, wobei die feste Zeitspanne durch das digitale Videoaufzeichnungssystem (103) vorgegeben ist, oder vom Benutzer konfigurierbar ist.

3. Verfahren nach Anspruch 1, wobei Schritt d) das Analysieren von Nutzungsdaten des digitalen Videoaufzeichnungssystems (103) umfasst, um einen angepassten Aufzeichnungsplan zu bestimmen, der einem oder mehreren mehrfachen alternativen Zeitfenstern entspricht, wenn es weniger wahrscheinlich ist, dass ein Benutzer die Ressource verwendet

4. Verfahren nach Anspruch 1, wobei die erste Aufzeichnungsanfrage zunächst einem ersten Zeitfenster (321) und die zweite Aufzeichnungsanfrage zunächst einem zweiten Zeitfenster (330) entspricht, das sich zeitlich zumindest teilweise mit dem ersten Zeitfenster überschneidet.

5. Verfahren nach Anspruch 4, wobei die offene Aufzeichnungsanfrage eine rollende Abfrage nach neuen Planungsinformationen bezüglich des zweiten Programms (302) umfasst, wobei die rollende Abfrage periodisch ausgeführt wird, wenn das System neue EPG-Daten empfängt.

6. Verfahren nach Anspruch 5, wobei die rollende Abfrage nach einer endlichen Zeitspanne abläuft.

7. Verfahren nach Anspruch 1, ferner umfassend:
Analysieren von Prioritätsdaten, um eine höhere Priorität für die erste Aufzeichnungsanforderung zu bestimmen, bevor die erste Aufzeichnungsanfrage während des ersten Zeitfensters (321) geplant wird; und
Einstellen der offenen Aufzeichnungsanfrage entsprechend dem zweiten Programm (302).

8. Digitaler Videorecorder (103), umfassend:
eine Kommunikationsschnittstelle (201), die Videoprogramminhalte von einer Inhaltsquelle (101) empfängt;
eine Benutzereingabeschnittstelle (206), die eine erste Aufzeichnungsanfrage zum Aufzeichnen eines ersten Programms (301) während eines ersten Zeitfensters (321) und eine zweite Aufzeichnungsanfrage zum Aufzeichnen eines zweiten Programms (302) während eines zweiten Zeitfensters (330) empfängt; und
einen Prozessor (203), der konfiguriert ist um:
a) einen Ressourcenkonflikt zwischen der ersten und zweiten Aufzeichnungsanforderung unter gleichzeitiger Nutzung der Ressource zu identifizieren;
b) aktuelle EPG-Daten (Electronic Programming Guide) zu verarbeiten, um einen alternativen Aufzeichnungsplan für mindestens eines der ersten und zweiten Programme zu suchen, die den Ressourcenkonflikt lösen würden, und
wobei der digitale Videorecorder, **dadurch gekennzeichnet ist, dass** der Prozessor ferner wie folgt konfiguriert ist, um:
wenn eine Lösung des Konflikts nicht möglich ist,
c) die erste Aufnahmeanfrage zu planen, um das erste Programm während des ersten Zeitfensters aufzuzeichnen, und eine offene Aufnahmeanfrage einzustellen, die nach Ablauf einer bestimmten Zeitspanne abläuft, die zusätzliche Planungsdaten aus neuen EPG-Daten sucht, die einer anderen Übertragung des zweiten Programms entsprechen und eine Lösung für den Ressourcenkonflikt darstellen;
d) nachfolgend zusätzliche Planungsdaten zu empfangen, die der offenen Aufzeichnungsanfrage entsprechen, wobei die zusätzlichen Planungsdaten einer alternativen Sendezeit des zweiten Programms (302) entsprechen; und
e) ein Zeitfenster dynamisch anzupassen, in dem das zweite Programm basierend auf den empfangenen zusätzlichen Planungsdaten aufgezeichnet werden soll.

9. Digitaler Videorecorder (103) nach Anspruch 8, wobei in Schritt b) der Prozessor (203) betreibbar ist, um:
Nutzungsdaten des digitalen Videorecorders zu analysieren, um einen angepassten Aufzeichnungsplan zu bestimmen, der einem oder mehreren der mehrfachen alternativen Zeitfenster entspricht, wenn es weniger wahrscheinlich ist, dass ein Benutzer die Ressource verwendet; und
den angepassten Zeitplan auszuwählen, um das erste (301) und zweite (302) Programm aufzunehmen, der zumindest teilweise auf der Analyse der Nutzungsdaten basiert.

10. Digitaler Videorecorder (103) nach Anspruch 8, wobei die feste Zeitspanne durch das digitale Videoaufzeichnungssystem vorgegeben ist, oder vom Benutzer konfigurierbar ist.

11. Digitaler Videorecorder (103) nach einem der Ansprüche 8 bis 10, wobei der Prozessor (203) die offene Aufzeichnungsanfrage zum Abfragen mehrerer unterschiedlicher Programmkanäle konfiguriert, um nach Übertragungen des zweiten (302) Programms zu suchen.

12. Digitaler Videorecorder (103) nach einem der Ansprüche 8 bis 10, wobei die offene Aufzeichnungsanfrage eine rollende Abfrage nach neuen Planungsinformationen bezüglich der zweiten Aufzeichnungsanfrage umfasst, die periodisch ausgeführt wird, wenn neue Daten des elektronischen Programmführers an der Vorrichtung empfangen werden.

## Revendications

1. Procédé d'ajustement d'horaires d'enregistrement dans un système d'enregistrement vidéo numérique (103), comprenant :
a) l'identification d'une première demande d'enregistrement pour enregistrer un premier programme (301) pendant un premier intervalle de temps (321) sur le système d'enregistrement vidéo numérique en utilisant une ressource ;
b) l'identification d'une seconde demande d'enregistrement pour enregistrer un second programme (302) pendant un second intervalle de temps (330) sur le système d'enregistrement vidéo numérique en utilisant la ressource ;
c) l'identification d'un conflit de ressources entre les première et seconde demandes d'enregistrement en utilisant simultanément la ressource ;
d) le traitement de données de guide de programmation électronique (EPG) actuelles afin de rechercher un horaire d'enregistrement alternatif pour au moins l'un des premier et second programmes qui résoudrait le conflit de ressources ;
le procédé étant **caractérisé en ce qu'**il comprend en outre :
e) lorsque la résolution du conflit n'est pas possible sur la base des données de guide de programmation électronique (EPG) actuelles,
la programmation de la première demande d'enregistrement pour enregistrer le premier programme pendant le premier intervalle de temps ; et
l'établissement d'une demande d'enregistrement ouverte qui expire lors du passage d'une période de temps fixe, la demande d'enregistrement ouverte recherchant des données de programmation supplémentaires, à partir de nouvelles données EPG, correspondant à une autre diffusion du second programme, qui fournit une résolution au conflit de ressources ;
f) la réception ultérieure de données de programmation supplémentaires qui satisfont la demande d'enregistrement ouverte, les données de programmation supplémentaires correspondant à une heure de diffusion alternative du second programme (302) ; et
g) l'ajustement dynamique d'un intervalle de temps dans lequel enregistrer le second programme sur la base des données de programmation supplémentaires reçues.

2. Procédé selon la revendication 1, dans lequel la période de temps fixe est prédéfinie par le système d'enregistrement vidéo numérique (103), ou est configurable par l'utilisateur.

3. Procédé selon la revendication 1, dans lequel l'étape d) comprend l'analyse de données d'utilisation du système d'enregistrement vidéo numérique (103) pour déterminer un horaire d'enregistrement ajusté, correspondant à un ou plusieurs intervalles de temps alternatifs multiples, lorsqu'un utilisateur est moins susceptible d'utiliser la ressource.

4. Procédé selon la revendication 1, dans lequel la première demande d'enregistrement correspond initialement à un premier intervalle de temps (321) et la seconde demande d'enregistrement correspond initialement à un second intervalle de temps (330) qui chevauche temporairement au moins en partie le premier intervalle de temps.

5. Procédé selon la revendication 4, dans lequel la demande d'enregistrement ouverte comprend une requête continue pour de nouvelles informations de programmation concernant le second programme (302), la requête continue étant exécutée périodiquement à mesure que le système reçoit de nouvelles données EPG.

6. Procédé selon la revendication 5, dans lequel la requête continue expire après une période de temps finie.

7. Procédé selon la revendication 1, comprenant en outre :
l'analyse de données de priorité pour déterminer une priorité plus élevée pour la première demande d'enregistrement avant la programmation de la première demande d'enregistrement pendant le premier intervalle de temps (321) ; et
l'établissement de la demande d'enregistrement ouverte correspondant au second programme (302).

8. Enregistreur vidéo numérique (103), comprenant :
une interface de communication (201) qui reçoit un contenu de programmation vidéo à partir d'une source de contenu (101) ;
une interface d'entrée utilisateur (206) qui reçoit une première demande d'enregistrement pour enregistrer un premier programme (301) pendant un premier intervalle de temps (321), et une seconde demande d'enregistrement pour enregistrer un second programme (302) pendant un second intervalle de temps (330) ; et
un processeur (203) configuré pour :
a) identifier un conflit de ressources entre les première et seconde demandes d'enregistrement en utilisant simultanément la ressource ;
b) traiter des données de guide de programmation électronique (EPG) actuelles afin de rechercher un horaire d'enregistrement alternatif pour au moins l'un des premier et second programmes qui résoudrait le conflit de ressources, et
l'enregistreur vidéo numérique étant **caractérisé en ce que** le processeur est en outre configuré pour :
lorsque la résolution du conflit n'est pas possible,
c) programmer la première demande d'enregistrement pour enregistrer le premier programme pendant le premier intervalle de temps, et établir une demande d'enregistrement ouverte qui expire lors du passage d'une période de temps fixe, qui recherche des données de programmation supplémentaires, à partir de nouvelles données EPG, correspondant à une autre diffusion du second programme, qui fournit une résolution au conflit de ressources ;
d) recevoir ultérieurement des données de programmation supplémentaires qui satisfont la demande d'enregistrement ouverte, les données de programmation supplémentaires correspondant à une heure de diffusion alternative du second programme (302) ; et
e) ajuster dynamiquement un intervalle de temps dans lequel enregistrer le second programme sur la base des données de programmation supplémentaires reçues.

9. Enregistreur vidéo numérique (130) selon la revendication 8, dans lequel à l'étape b), le processeur (203) peut être utilisé pour :
analyser des données d'utilisation de l'enregistreur vidéo numérique pour déterminer un horaire d'enregistrement ajusté, correspondant à un ou plusieurs intervalles de temps alternatifs multiples, lorsqu'un utilisateur est moins susceptible d'utiliser la ressource ; et
sélectionner l'horaire ajusté pour enregistrer les premier (301) et second (302) programmes sur la base au moins en partie de l'analyse des données d'utilisation.

10. Enregistreur vidéo numérique (103) selon la revendication 8, dans lequel la période de temps fixe est prédéfinie par le système d'enregistrement vidéo numérique, ou est configurable par l'utilisateur.

11. Enregistreur vidéo numérique (103) selon l'une quelconque des revendications 8 à 10, dans lequel le processeur (203) configure la demande d'enregistrement ouverte pour interroger des canaux de programmation disparates multiples afin de rechercher des diffusions du second (302) programme.

12. Enregistreur vidéo numérique (103) selon l'une quelconque des revendications 8 à 10, dans lequel la demande d'enregistrement ouverte comprend une requête continue pour de nouvelles informations de programmation concernant la seconde demande d'enregistrement, qui est exécutée périodiquement lorsque de nouvelles données de guide de programmation électronique sont reçues sur le dispositif.
